# EUROPEAN PATENT APPLICATION

(11) **EP 2 639 526 A1**
(43) Date of publication of application: **18.09.2013**
(21) Application number: 12305292.0
(22) Date of filing: 13.03.2012
(51) Int. Cl.: F24J 2/16, F24J 2/54, F24J 2/46

(54) **A solar concentrator for a solar energy collector and a method of adjusting the solar concentrator**

(71) Applicant: Areva Solar, Inc, Mountain View CA 94043 (US)
(72) Inventor: Hoermann, Alexander, Menlo Park, California 94025 (US); Ray, Forest, Saint Philadelphia, Pennsylvania 19147 (US)
(74) Representative: Domenego, Bertrand

(57) **Abstract**

This solar concentrator (6) comprises at least one row (12) of reflectors (14) comprising mirrors (34), said row (12) extending along a longitudinal direction (L), the reflector (14) of said row (12) being pivotally supported with respect to the ground about a pivot axis (A-A), said row comprising at least a first reflector (14) and a second reflector (14) and a connecting arrangement (42, 44) which connects adjacent longitudinal ends (26) of the first and second reflector assemblies (14), the connecting arrangement (42, 44) allowing a relative movement between the first and second reflector assemblies (14).

## Description

The present invention generally relates to a solar concentrator for a solar energy collector.

A solar energy collector may comprise a receiver for converting solar energy into another form of energy and a solar concentrator for concentrating incident solar radiations to the receiver.

The receiver may be adapted for circulation of a heat transfer fluid for converting solar energy into thermal energy. Such a receiver generally comprises tubes for circulation of the heat transfer fluid to be subjected to concentrated solar radiations.

The solar concentrator may comprise at least one row of reflectors extending in a longitudinal direction generally oriented north-south direction, said reflectors being pivotally supported with respect to the ground about horizontal longitudinal axis to track the diurnal sun's motion and reflect the incident solar radiations towards the receiver.

Adjustment and alignment of the reflectors of the solar concentrator such that solar radiations are correctly reflected towards the receiver impact the efficiency of the solar energy collector.

Besides, solar energy collectors are generally located in sunny areas with high temperature variations between day and night causing thermal deformations of the solar concentrator which might impact initial adjustment and alignment of the reflectors and limit the efficiency of the solar concentrator.

An aim of the invention is to provide a solar concentrator having an improved efficiency.

To this end, the invention proposes a solar concentrator for a solar energy collector, said solar concentrator comprising at least one row of reflectors comprising mirrors, said row extending along a longitudinal direction, the reflector of said row being pivotally supported with respect to the ground about a pivot axis, said row comprising at least a first reflector and a second reflector and a connecting arrangement which connects adjacent longitudinal ends of the first and second reflector assemblies, the connecting arrangement allowing a relative movement between the first and second reflector assemblies.

In other embodiments, the solar energy collector may comprise one or several of the following features, taken in isolation or in any technically feasible combination:
- the connecting arrangement allows a relative movement in the longitudinal direction between the first and second reflectors;
- the connecting arrangement comprises a respective support member for rigidly fixing the longitudinal end of each of the first and second reflectors with allowing adjusting a tilting angle of each reflector about the pivot axis relative to the corresponding support member;

- the connecting arrangement pivotally couples the first and second reflector assemblies about the pivot axis;
- the connecting arrangement allows a relative rotation between the first and second reflectors about the pivot axis;
- the connecting arrangement comprises at least one flexure plate, said flexure plate being flexible to allow a relative longitudinal movement of said one of the first and second reflectors with respect to the other;
- the connecting arrangement comprises two flexure plate each supporting a longitudinal end of a respective one of the first and second reflectors;
- each flexure plate comprises at least one fixing hole for fixedly fixing a longitudinal end of one of the first and second reflectors, said fixing hole being elongated to allow adjusting a tilting angle of each reflector about the pivot axis relative to the corresponding flexure plate;
- each flexure plate comprises a central portion pivotally supported with respect to the ground and end portions fixedly supporting a longitudinal end of one of the first and second reflectors;
- each flexure plate comprises an upset between the central portion and each end portion;
- each flexure plate comprises a landing tab provided with an adjustment hole for receiving an adjustment screw for adjusting the position of the longitudinal end of the reflector with respect to the flexure plate.

The invention also relates to a solar energy collector comprising a receiver for circulation of a heat transfer fluid and a solar concentrator as defined above.

The invention also relates to a method of adjusting of a reflector assembly in a row of a solar concentrator for a solar energy collector extending along a longitudinal direction, said reflectors being pivotally supported with respect to the ground about a pivot axis and pivotally coupled about the pivot axis by connecting arrangements each supporting and connecting the adjacent longitudinal ends of two reflectors in the row and a drive assembly for driving said reflector assembly, said drive system coupled to one of the connecting arrangements, the method comprising the following steps:
- adjusting a first reference reflector;
- aligning the other reflectors of the reflector assembly to the first reflector.

In other embodiments, the method may comprise one or several of the following features, taken in isolation or in any technically feasible combination:
- the first reflector is supported by the connecting arrangement coupled to the drive system;
- the other reflectors are aligned successively from the nearest to the furthest of the drive system on either side of the drive system;
- the other reflectors are aligned by adjusting the tilting at the longitudinal end of each reflector closest to the drive system;
- each reflector is adjusted with:
   - loosening fixing bolts fixing the longitudinal end of said reflector to the connecting arrangement supporting said longitudinal end such that the longitudinal end seats on landing tabs of the connecting arrangement;
   - screwing an adjustment screw in an adjustment hole of at least one of the landing tabs to adjust the position of the reflector with respect to the connecting arrangement; and
   - tightening the fixing bolts to fix the reflector to the connecting arrangement in the adjusted position.

The invention and its advantages will be better understood on reading the following description given solely by way of example and with reference to the appended drawings in which:
- Figure 1 is an end view of a solar energy collector according to the invention, comprising a receiver and a solar concentrator;
- Figure 2 is a perspective view of the solar energy collector of Figure 1;
- Figure 3 is a side view of a reflector of the solar concentrator;
- Figure 4 and 5 are perspective views of a first connecting arrangement for connecting two adjacent ends of two reflectors, respectively alone and with a reflector fixed thereon;
- Figure 6 is a perspective view of a second connecting arrangement for connecting two adjacent ends of two reflectors;
- Figure 7 is a diagrammatical view illustrating steps of a method of aligning reflectors of a reflector assembly of the solar concentrator on support structures;
- Figure 8 is a diagrammatical view illustrating steps of a method of mounting and aligning reflectors of the solar concentrator on support structures;

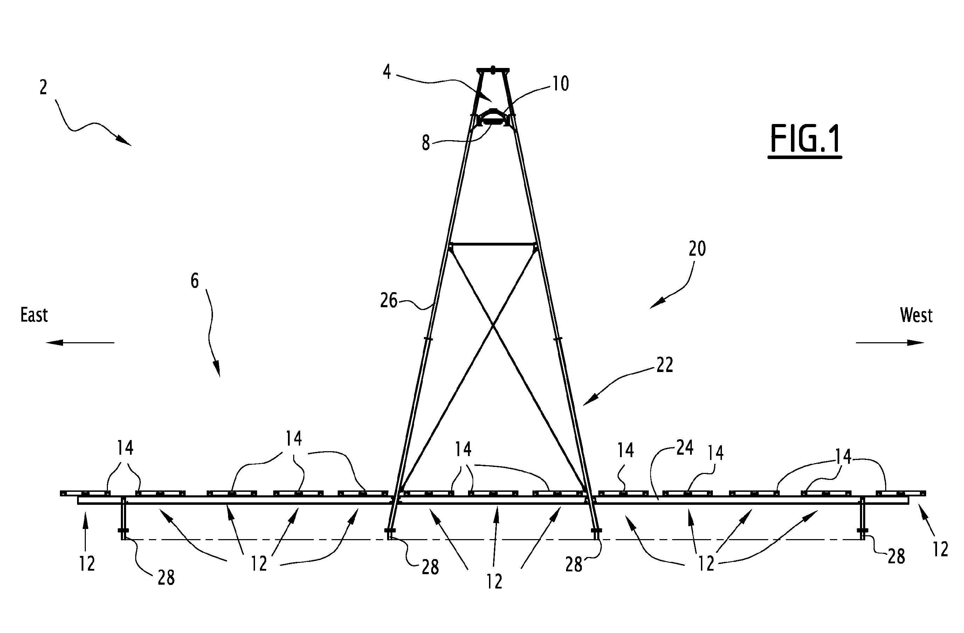

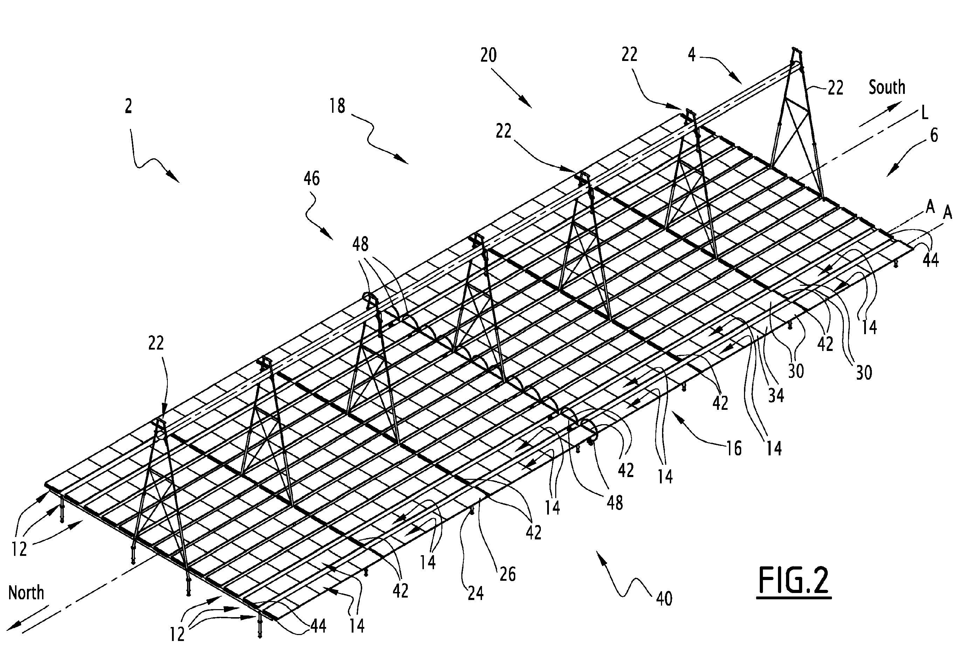

The solar energy collector 2 of Figures 1 and 2 comprises a receiver 4 for circulation of a heat transfer fluid and a solar concentrator 6 to concentrate solar energy on the receiver 4.

The solar energy collector 2 extends in a horizontal longitudinal direction L (Figure 2) oriented North-South. Alternatively, the longitudinal direction L may be oriented East-West.

The receiver 4 is configured for converting solar energy in thermal energy stored in the heat transfer fluid.

The receiver 4 is elevated above ground. The receiver 4 extends in the longitudinal direction L. The receiver 4 comprises a plurality of tubes 8 (Figure 1) for circulation of a heat transfer fluid and an inverted trough 10 (Figure 1). The tubes 8 extend parallel and side-by-side in the longitudinal direction L. The tubes 8 are accommodated and supported in the trough 10. The trough 10 has a downwardly opening aperture for the radiation reflected by the solar energy concentrator 6 to hit the tubes 8. The receiver 4 may have a window across the aperture.

The solar concentrator 6 is configured for reflecting and concentrating incident solar radiations upwardly on the receiver 4.

The solar concentrator 6 comprises rows 12 of reflectors 14. The rows 12 extend parallel and side-by-side in the longitudinal direction L. Each row 12 comprises several reflectors 14 aligned in the longitudinal direction L. Such a solar concentrator 6 is of the Linear Fresnel Reflector (LFR) type. The reflectors 14 in a row 12 are pivotally supported with respect to the ground about a horizontal pivot axis A-A parallel to the longitudinal direction L.

Each row 12 comprises at least one reflector assembly 16 (figure 2) comprising several reflectors 14 pivotally coupled about the common pivot axis A-A to rotate jointly. A reflector assembly may comprises two, four, six, height ore more reflectors 14. As illustrated on Figure 2, each reflector assembly 16 comprises six reflectors 14.

The solar energy collector 2 comprises segments 18 in which the reflectors 14 of each row 12 form a reflector assembly 16. Only one segment 18 of the solar energy collector 2 is illustrated on Figure 2.

The solar energy collector 2 comprises a support installation 20 supporting the reflectors 14 and the receiver 4. The support installation 20 comprises several support structures 22 spaced and distributed along the longitudinal direction L.

Each support structure 22 extends transversally and comprises a transverse horizontal support beam 24 supporting reflectors 14 and a mast 26 supporting the receiver 4 above the reflectors 14. The support beam 24 and the mast 26 are mounted on in-ground pillars 28 of the support structure 22

Each reflector 14 extends in the span between two adjacent support structures 22 with the longitudinal ends 28 of the reflector 14 pivotally supported on the support beams 24 of said support structures 22 about the horizontal pivot axis A-A parallel to the longitudinal direction L.

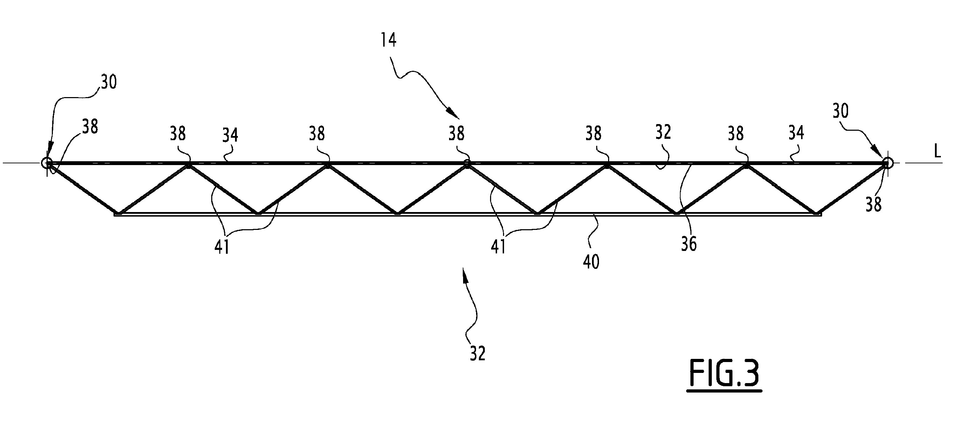

As illustrated on Figure 3, each reflector 14 is elongated in the longitudinal direction L and comprises a frame 32 supporting one or several mirrors 34.

The frame 32 has a lightweight latticed structure. The frame 32 comprises a corrugated deck 36 extending in the longitudinal direction L, transverse ribs 38 fixed on a lower face of the deck 36, a longitudinal keel 40 and struts 41 connecting the keel 40 to the ribs 38 thus defining the latticed structure. The keel 40 has a length shorter than that of the deck 36. The longitudinal ends of the keel 40 are connected to end ribs 38 fixed at the longitudinal ends of the deck 36 by struts 41 extending obliquely upwardly.

The mirrors 34 are mounted onto the upper face of the deck 36. The mirrors 34 may be planar mirror having a planar cross section or cylindrical-parabolic mirrors having a circular arc cross-section and form a line of focus at the receiver 4. The focal length may be approximately equal to the distance between each cylindrical-parabolic mirror and the receiver 4 or longer.

As illustrated on Figure 2, the solar concentrator 6 comprises first connecting arrangements 42 or cradles each connecting the adjacent longitudinal ends 30 of a first and a second reflector 14 of a reflector assembly 16 with pivotally coupling them. Each first connecting arrangement 42 pivotally supports the longitudinal ends 30 of the first and second reflectors 14 on a support beam 24.

The solar concentrator 6 comprises second connecting arrangements 44 or cradles each pivotally supporting at least one longitudinal end 30 of a reflector 14 on a support beam 24 at a longitudinal end of a reflector assembly 16.

An end second connecting arrangement 44 at the end of a row 12 pivotally supports the longitudinal end 30 of one single reflector 14 with allowing relative rotation of these two reflectors 14 about the rotational axis A-A

An intermediate second connecting arrangement 44 at the junction between two adjacent reflector assemblies 16 of a row 12 pivotally supports the adjacent longitudinal ends of one reflector 14 of each of the two reflector assemblies 16 with allowing relative rotation of these two reflectors 14 about the pivot axis A-A.

The solar concentrator 6 comprises a drive assembly 46 for pivotally driving the reflectors 14 for tracking the diurnal sun's motion. The drive assembly 46 comprises a respective drive system 48 for pivotally driving each reflector assembly 16.

Each drive system 48 is located at the middle of the reflector assembly 16 at the junction between two adjacent reflectors 14. Each reflector assembly 16 has here three reflectors 14 on either sides of the drive system 48.

Each drive system 48 comprises for example a hoop pivotally coupled to a first connecting arrangement 42 and driven by a motor via a chain or a belt. Drive assemblies 48 of adjacent reflector assemblies 16 are preferably electronically synchronized for synchronized rotation of the reflectors 14 of the different rows 12 during sun's motion track.

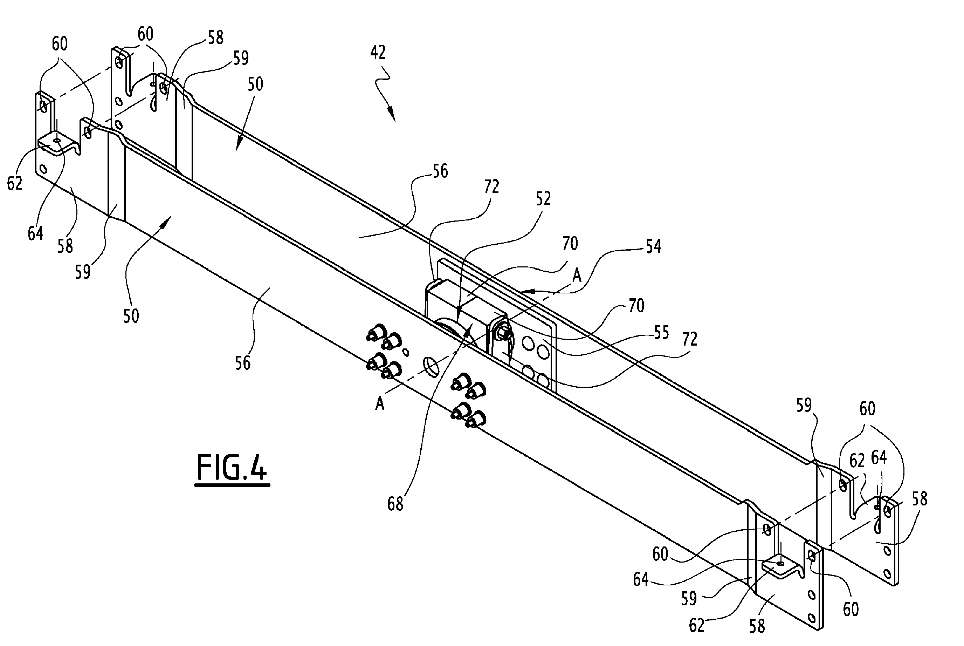

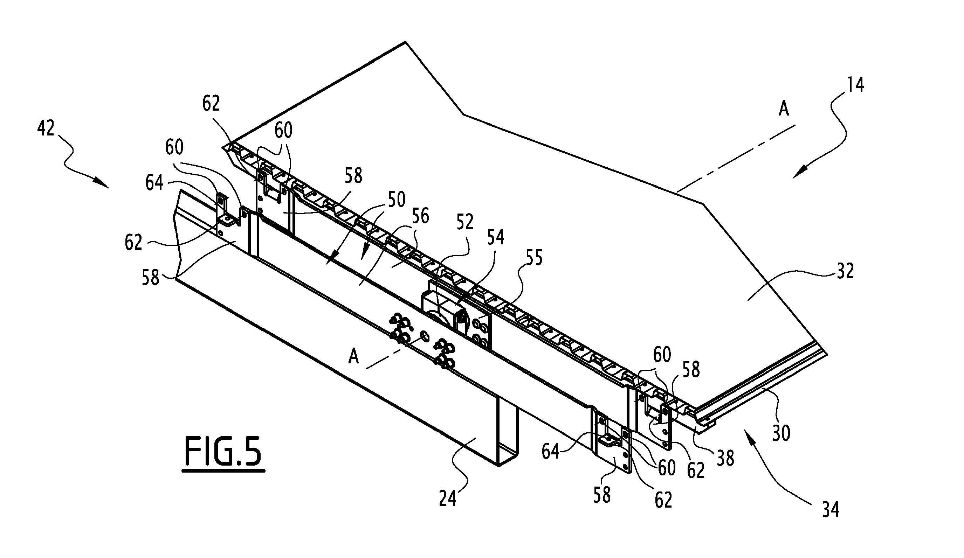

The first connecting arrangements 42 are identical. A first connecting arrangement 42 is illustrated on Figures 4 and 5 and further described in the following.

The first connecting arrangement 42 is configured to allow a relative movement between the first and the second reflectors 14 connected by the first connecting arrangement 42.

More specifically, the first connecting arrangement 42 is configured to allow a longitudinal relative movement in the longitudinal direction between the first and the second reflectors 14 connected by the first connecting arrangement 42 to account for thermal expansion and to allow a relative tilting between the first and second reflectors 14 to adjust angular positions of the first and second reflectors 14 independently.

The first connecting arrangement 42 comprises two elongated flexure plates 50 extending vertically and transversely. The flexure plates 50 are parallel and extend side-by-side. Each flexure plate 50 is adapted for supporting a longitudinal end 30 (figure 5) of a respective reflector 14.

The first connecting arrangement 42 comprises a rotation axle 52 extending along the pivot axis A-A between the two flexure plates 50 and pivotally coupling the flexure plates 50 about the pivot axis A-A.

The first connecting arrangement 42 comprises a bearing assembly 54 for supporting the rotation axle 52 onto a support beam 24 (Figure 5) pivotally about the pivot axis A-A.

The axle 52 extends between the flexure plates 50 which are fixed to the axial ends of the axle 52 via fixing plates 55 integral with the axle 52. Only one fixing plate 55 is visible on Figures 4 and 5.

Each flexure plate 50 comprises a central portion 56 fixed to the axle 52 and two end portions 58 connected to the central portion 56 by intermediate upsets 59 such that each end portion 58 is offset with respect to the central portion 56 in the direction of the pivot axis A-A. The end portions 58 are coplanar. Each end portion 58 is offset from the central portion 56 such as to allow fixing the longitudinal end 30 of a reflector 14 on the end portions 58 with a longitudinal gap between the longitudinal end 30 of the reflector 14 and the central portion 58. Each end portion 58 of a flexure plate 50 is offset from the central portion 56 opposite the other flexure plate 50. The axial ends of the rotation axle 52 fixed to the central portions 56.

Each end portion 58 is provided with fixing holes 60 extending through the end portion 48 along a horizontal axis for fixedly fixing a longitudinal end 30 of a reflector to the end portion 58. Two fixing holes 60 are provided on each end portion 58. The fixing holes 60 are elongated to allow adjusting the position of the reflector assembly with respect to the flexure plate 50. Each fixing hole 60 is elongated vertically when the flexure plate 50 extends horizontally.

Each flexure plate 50 comprises a landing tab 62 protruding horizontally from each end portion 58 to provide vertical support to the reflector 14 fixed to the flexure plate 50.

Each landing tab 62 is cut in the end portion 58 and folded to protrude horizontally away from the other flexure plate 50. Each landing tab 62 has a threaded adjustment hole 64 extending along a vertical axis through the landing tab 62.

The bearing assembly 54 comprises a bearing 68 comprising two bearing halves 70 fixed together around the axle 52 and fixing brackets 72 for fixing the bearing 68 on a support beam 24. The bearing halves 70 define a cylindrical bearing surface pivotally receiving the axle 52.

The brackets 72 are located on either side of the bearing 68. Each bracket 72 is fixed to the bearing 56 and to the support beam 24 (Figure 5).

A longitudinal end 30 of a reflector 14 is illustrated on Figure 5 for illustrating the fixture of the reflector 14 onto the first connecting arrangement 42. An end transverse rib 34 of the frame 28 of the reflector 14 is bolted on the end portions 58 using fixing bolts (diametrically represented by mixed lines) extending through the fixing holes 60.

As it will be explained in greater detail below, an adjustment method comprises the successive steps of loosening the fixing bolts to allow movement of the reflector 14 with respect to the end portions 58 and seating the reflector 14 on the landing tabs 62, screwing adjustment screws in the adjustment hole 64 of at least one of the landing tabs 62 to adjust position of the reflector assembly and tightening the fixing bolts in the fixing holes 60 to immobilize the reflector 14 with respect to flexure plate 50.

Each flexure plate 50 has inertia in a vertical plane to vertically support a reflector 14 and is flexible horizontally to allow longitudinal movement of the end portions 58 relative to the central portion 56. Flexion of the flexure plate 50 allows longitudinal movement of each reflector 14 with respect to the support beam 24 and a relative longitudinal movement of the first and second reflectors 14 connected by the first connecting arrangement 42.

The upsets 59 allow each flexure plate 50 to flex with a longitudinal stroke of the reflector 14 supported by the end portions 58 without the reflector 14 abutting on the central portion 56 which is fixed.

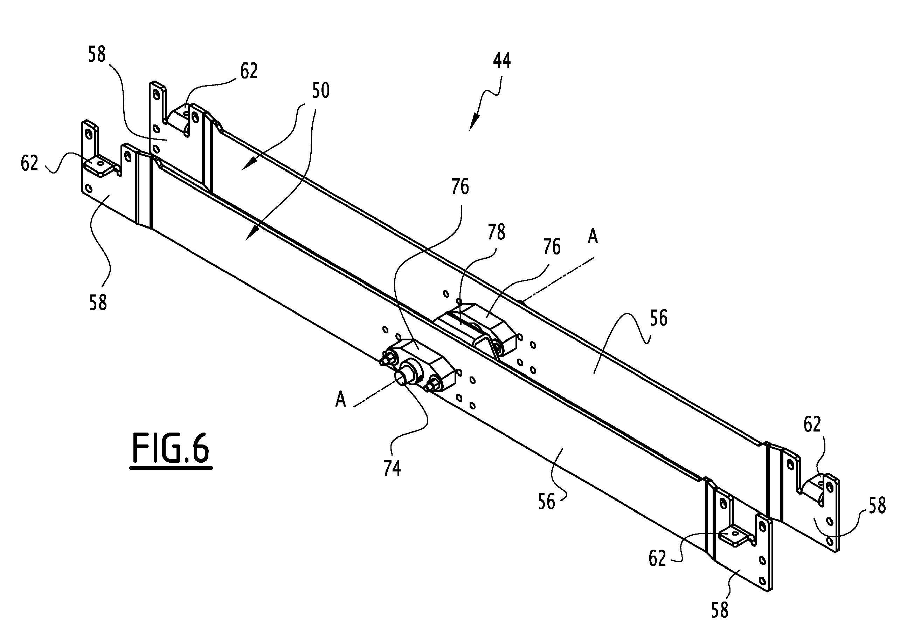

Figure 6 illustrates an intermediate second connecting arrangement 44. The second connecting arrangement 44 is configured to allow a relative rotation between the first and the second reflectors 14 about the pivot axis A-A and a longitudinal relative movement between the first and the second reflectors 14.

The intermediate second connecting arrangement 44 is similar to the first connecting arrangement of Figure 4 and 5 and differs from said first connecting arrangement 42 in that the flexure plates 50 are not coupled pivotally about axis A-A.

The intermediate second connecting arrangement 44 comprises flexure plates 50, a support shaft 74 extending in the pivot axis A-A, bearings 76 and a fixing base 78.

The flexure plates 50 are identical to that of the first connecting arrangement 42. Each flexure plate 50 is mounted on the support shaft 74 pivotally about axis A-A via a respective bearing 76 fixed to the flexure plate 50 and pivotally supported on the shaft 74 about pivot axis A-A.

The fixing base 78 is located between the two flexure plates 50. The fixing base 78 is to be fixed to a support beam 24 (not shown) and the support shaft 74 is mounted on the fixing base 78.

An end second connecting arrangement 44 differs from the intermediate second connecting arrangement of Figure 6 in that is comprises one single flexure plate 50.

A method of installing the solar energy collector 2 and adjusting the solar collector will be described below.

The method comprises the steps of:
- installing the support structures 22.
- installing the connecting arrangements 42, 44 on the support structures 22;
- installing the drive assemblies 48 on the appropriate support structures 22;
- installing the rows 12 of reflectors 14 on the support structures 22;
- installing the receiver 4 on the support structures 22; and
- adjusting the solar concentrator 6 by adjusting each reflector 14.

In the step of installing the rows 12 of reflectors 14, the different reflector assemblies 16 are installed sequentially. The reflectors 14 of each reflector assembly 16 are installed in a specific sequence.

The sequence of installing reflectors 14 of a reflector assembly 16 is described below.

A first reflector 14 is installed in the reflector assembly 16 and the subsequent reflectors 14 are installed in the reflector assembly 16 sequentially such that each reflector 14 is pivotally coupled to the previously installed reflector assembly(ies) 14.

Preferably, the first reflector 14 is installed next to the drive system 48 which is locked in rotation, and the next reflectors 14 are installed in the reflector assembly 16 inside out. The first reflector 14 is installed on the first connecting arrangement 42 coupled to the drive system 48 of the reflector assembly 16.

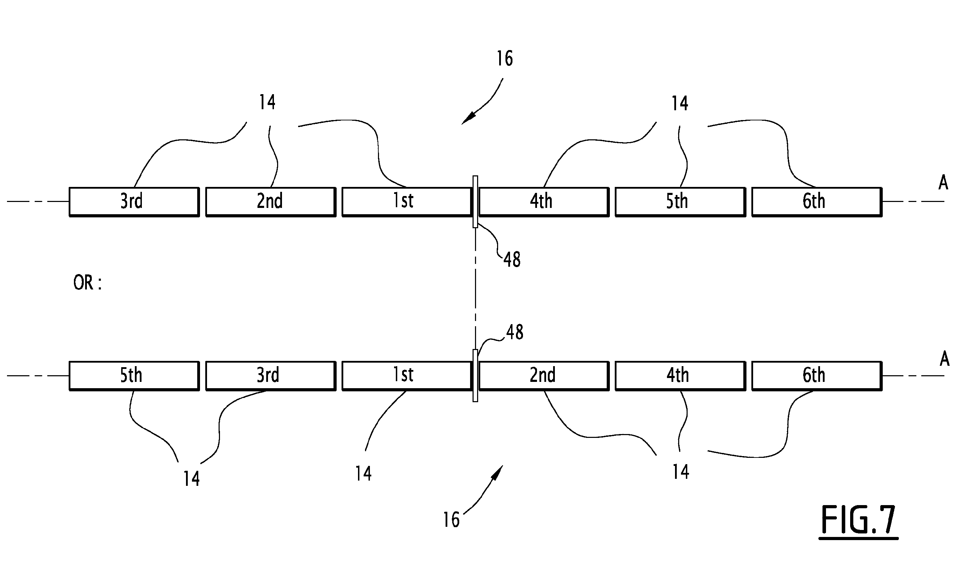

Figure 7 illustrates two acceptable orders of installation of reflectors 14 in a reflector assembly 16 of six reflectors 14 with a drive system 48 in the middle.

In a first acceptable order of installation (top of figure 7), reflectors 14 are installed on a first side of the drive system 48 from the drive system 48 to the end of the reflector assembly 16 and the other reflectors 14 are installed on the second side from the drive system 48 to the other end of the reflector assembly 16.

In a second acceptable order of installation (bottom of figure 7), the reflectors 14 are installed alternatively on either sides of the drive system 48 from the drive system 48 to the ends of the reflector assembly 16.

During installation, reflectors 14 are subjected to wind which causes the reflectors 14 to rotate about their axis of rotation A-A. The above sequence allows fixing the reflectors 14 in rotation using the drive system 48. This prevents injuries and damages.

Alternatively, the reflectors 14 are installed linearly, successively from one end of the reflector assembly 16 to the other. This however requires locking the first reflector 14 in rotation with specific means.

The reflector assemblies 16 are installed successively.

Adjacent reflector assembly 16 in a segment 18 are installed transversely successively, either in an inside-out sequence from the centerline of the solar concentrator 6 to the sides, or linearly in the transverse direction.

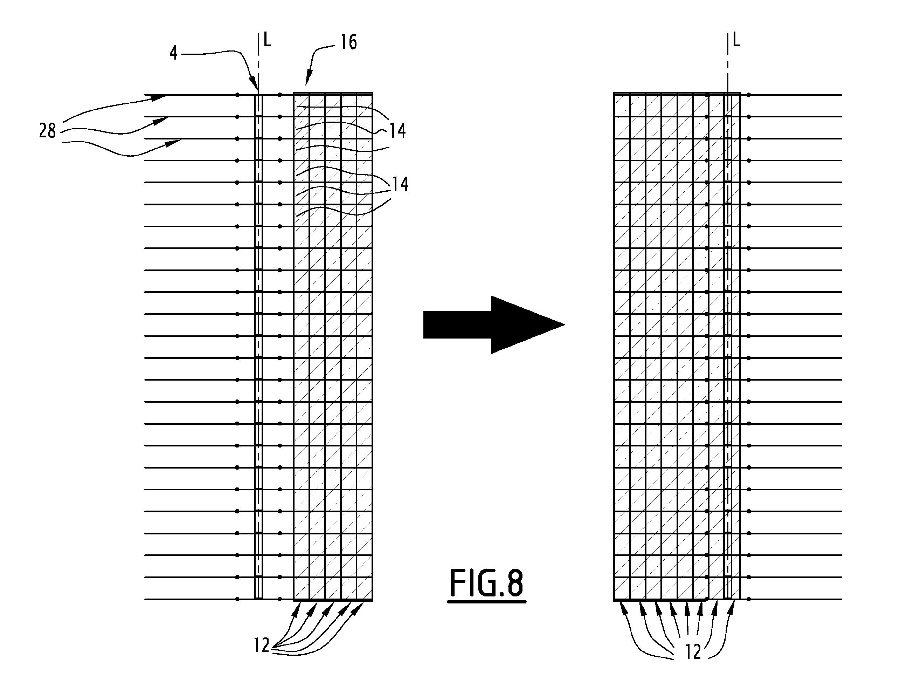

In a preferred sequence illustrated on Figure 8, the step of installing the reflectors 14 comprises a first sub-step of installing reflector assemblies 16 inside-out with firstly installing reflector assemblies 16 of a side with leaving free access under the masts 26 of the installation structures 22 and subsequently a second sub-step of installing the other reflector assemblies 16 of the other side.

The step of installing the receiver 4 is operated when access under the masts 26 is free. Hence, the step of installing the receiver 4 is operated between the first step and the second sub-step of the step of installing the reflectors 14.

The installation of each reflector 14 is described below.

The reflector 14 is slowly lowered in place and loosely bolted into the fixing holes 60 of the flexure plates 50 of the connecting arrangements 42, 44 at the longitudinal ends 30 of the reflector 14. The reflector 14 is lowered to be fully seated on the landing tabs 62 of the flexure plates 50 and the bolts are tightened in the fixing holes 60.

The step of adjusting the reflectors 14 is operated preferably once all the reflectors 14 are installed. The reflectors 14 of each reflector assemblies 16 are adjusted successively.

The step of adjusting reflectors 14 of a reflector assembly 16 are described below.

The reflectors 14 of the reflector assembly 16 are adjusted sequentially with adjusting a first reference reflector 14 and then using the first reference reflector 14 as a basis to which all the other reflectors 14 are aligned.

The reflectors 14 are preferably adjusted inside-out from the drive system 48 to the ends of the reflector assembly 16, with adjusting reflectors 14 on a first side of the drive system 48 and subsequently the reflector assemblies of the other side of the drive system 48 as per the first acceptable sequence of Figure 7.

In a first adjusting step for adjusting reflectors 14 in a reflector assembly 16, the reflector assembly 16 is rotated with the aid of the drive system 48 such that the reflectors 14 face up. An inclinometer (not shown) is installed on the first reflector 14, approximately in the middle thereof along the first reflector 14. The inclinometer indicates the inclination on the reflector 14 with respect to a horizontal transverse direction perpendicular to the longitudinal direction L

The bolts fixing the end transverse rib 38 of first reflector 14 to the flexure plate 50 of the connecting arrangements 42 adjacent the drive system 48 are loosen such that the first reflector 14 is fully seated on the landing tabs 62 of the flexure plate 50. An adjusting screw is threaded in the adjustment hole 64 of at least one of the landing tabs 62 until the inclinometer indicates that the reflector 14 is horizontal. Once the appropriate tilt angle is attained, the fixing bolts are tightened in the fixing holes 60 to fix the reflector 14 in place. The adjusting screw(s) is(are) removed from the landing tab(s) 62.

The adjustment steps are operated on the other reflectors 14, with always adjusting the longitudinal end closest to the drive system 48 of the reflector assembly 16.

Optionally, if deemed necessary, the position of each reflector 14 is adjusted at both longitudinal ends thereof, preferably first at the longitudinal end 30 closest to the drive system 48 of the reflector assembly 16 and second at the longitudinal end 30 furthest to the drive system 48 of the reflector assembly 16.

Owing to the invention, the connecting assemblies 42, 44 connecting a first and a second reflectors 14 allow a relative longitudinal movement of the first and second reflectors 14 as well as a relative longitudinal movement of each reflector 14 with respect to the support structures 22 it is mounted on.

This accounts for thermal expansion and contraction of the first and second reflectors 14 and improves torsion stability of the first and second reflectors and the efficiency of the solar energy collector. As a matter of fact, in the absence of capability of relative longitudinal movement, each reflector may be constrained axially thus resulting in torsion and defocusing of the reflector with respect to the receiver. This in turn lowers the efficiency of the solar energy collector.

The first connecting assemblies 42 allow coupling the first and second reflector it connects to define a reflector assembly having a drive assembly.

The second connecting assemblies 44 allow a free relative rotation of the first and second reflector it connects to allow relative rotation of the reflector in two adjacent reflector assemblies.

The connecting assemblies 42, 44 further allow adjusting the tilting of each reflector assembly by providing landing tabs for supporting the reflector at least temporarily and receiving an adjusting screw for adjusting the tilt angle before tightening the fixing bolts fixing the reflector to the connecting arrangement.

The method of mounting the reflectors and of adjusting the reflector is efficient and result in appropriate adjustment and thus improves efficiency of the solar concentrator.

The connecting assemblies and the associated adjusting method of the invention thus result in a solar energy collector having improved efficiency.

## Claims

1. A solar concentrator (6) for a solar energy collector (2), said solar concentrator (6) comprising at least one row (12) of reflectors (14) comprising mirrors (34), said row (12) extending along a longitudinal direction (L), the reflector (14) of said row (12) being pivotally supported with respect to the ground about a pivot axis (A-A), said row comprising at least a first reflector (14) and a second reflector (14) and a connecting arrangement (42, 44) which connects adjacent longitudinal ends (26) of the first and second reflector assemblies (14), the connecting arrangement (42, 44) allowing a relative movement between the first and second reflector assemblies (14).

2. Solar concentrator as in claim 1, wherein the connecting arrangement (42, 44) allows a relative movement in the longitudinal direction (L) between the first and second reflectors (14).

3. Solar concentrator as in claim 1 or 2, wherein the connecting arrangement (42, 44) comprises a respective support member (50) for rigidly fixing the longitudinal end (30) of each of the first and second reflectors (14) with allowing adjusting a tilting angle of each reflector (14) about the pivot axis (A-A) relative to the corresponding support member (50).

4. Solar concentrator as in any preceding claim, wherein the connecting arrangement (42) pivotally couples the first and second reflector assemblies (14) about the pivot axis (A-A).

5. Solar concentrator as in one of claims 1 - 3, wherein the connecting arrangement (44) allows a relative rotation between the first and second reflectors (14) about the pivot axis (A-A).

6. Solar concentrator as in any preceding claim, wherein the connecting arrangement (42, 44) comprises at least one flexure plate (50), said flexure plate (50) being flexible to allow a relative longitudinal movement of said one of the first and second reflectors (14) with respect to the other.

7. Solar concentrator as in claim 6, wherein the connecting arrangement comprises two flexure plate (50) each supporting a longitudinal end (30) of a respective one of the first and second reflectors (14).

8. Solar concentrator as in claim 6 or 7, wherein each flexure plate (50) comprises at least one fixing hole (60) for fixedly fixing a longitudinal end (30) of one of the first and second reflectors (14), said fixing hole (60) being elongated to allow adjusting a tilting angle of each reflector (14) about the pivot axis (A-A) relative to the corresponding flexure plate (50)

9. Solar concentrator as in any one of claims 6 - 8, wherein each flexure plate (50) comprises a central portion (56) pivotally supported with respect to the ground and end portions (58) fixedly supporting a longitudinal end (30) of one of the first and second reflectors (14).

10. Solar concentrator as in claim 9, wherein each flexure plate (50) comprises an upset between the central portion (56) and each end portion (58).

11. Solar concentrator as in any one of claims 6 - 10, wherein each flexure plate (50) comprises a landing tab (62) provided with an adjustment hole (64) for receiving an adjustment screw for adjusting the position of the longitudinal end of the reflector (14) with respect to the flexure plate (50).

12. Solar energy collector (2) comprising a receiver (4) for circulation of a heat transfer fluid and a solar concentrator (6) as in any one of the preceding claims for concentrating solar radiations to the receiver (4).

13. Method of aligning reflectors (14) of a reflector assembly (16) in a row (12) of a solar concentrator (6) for a solar energy collector (2) extending along a longitudinal direction (L), said reflectors (14) being pivotally supported with respect to the ground about a pivot axis (A-A) and pivotally coupled about the pivot axis (A-A) by connecting arrangements (42) each supporting and connecting the adjacent longitudinal ends of two reflectors in the row (12) and a drive assembly (48) for driving said reflector assembly (16), said drive system (48) coupled to one of the connecting arrangements (42), the method comprising the following steps:
- adjusting a first reference reflector (14);
- aligning the other reflectors (14) of the reflector assembly (16) to the first reflector (14).

14. Method as in claim 13, wherein the first reflector (14) is supported by the connecting arrangement (42) coupled to the drive system (48).

15. Method as in claim 13 or 14, wherein the other reflectors (14) are aligned successively from the nearest to the furthest of the drive system (48) on either side of the drive system (48).

16. Method as in one of claim 13 - 15, wherein the other reflectors (14) are aligned by adjusting the tilting at the longitudinal end (30) of each reflector (14) closest to the drive system (48).

17. Method as in one of claim 13 - 16, wherein each reflector (14) is adjusted with:
- loosening fixing bolts fixing the longitudinal end of said reflector to the connecting arrangement supporting said longitudinal end such that the longitudinal end seats on landing tabs of the connecting arrangement;
- screwing an adjustment screw in an adjustment hole of at least one of the landing tabs to adjust the position of the reflector with respect to the connecting arrangement; and
- tightening the fixing bolts to fix the reflector to the connecting arrangement in the adjusted position.
